# EUROPÄISCHE PATENTANMELDUNG

(11) **EP 4 226 776 A1**
(43) Veröffentlichungstag der Anmeldung: **16.08.2023**
(21) Anmeldenummer: 23154092.3
(22) Anmeldetag: 31.01.2023
(51) Int. Cl.: A23N 7/00

(54) **VERFAHREN ZUM ABZIEHEN EINER HAUT EINES LEBENSMITTELS, INSBESONDERE ZUM HÄUTEN VON TOMATEN**

(30) Priorität: 15.02.2022 DE 102022103509
(71) Anmelder: Elea Service GmbH, 49610 Quakenbrück (DE)
(72) Erfinder: Siemer, Claudia, 49593 Bersenbrück (DE); Töpfl, Stefan, 49076 Osnabrück (DE)
(74) Vertreter: Grünecker Patent- und Rechtsanwälte PartG mbB

(57) **Zusammenfassung**

Die vorliegende Erfindung betrifft ein Verfahren zum Abziehen einer Haut eines Lebensmittels, die mit einer darunterliegenden Schicht des Lebensmittels verwachsen ist, beispielsweise zum Abziehen der Haut von einem Fleisch oder Fruchtfleisch, insbesondere zum Häuten von Tomaten. Um das Lebensmittel kostengünstig und umweltschonend zu häuten, ohne dessen Inhaltsstoffe zu beeinträchtigen, umfasst das erfindungsgemäße Verfahren die folgenden Behandlungsschritte: a) Behandeln des Lebensmittels mit einem elektrischen Feld, und b) Abziehen der Haut vom Lebensmittel.

## Beschreibung

Die vorliegende Erfindung betrifft ein Verfahren zum Abziehen einer Haut eines Lebensmittels, die mit einer darunterliegenden Schicht des Lebensmittels verwachsen ist, beispielsweise zum Abziehen der Haut von einem Fleisch oder Fruchtfleisch, insbesondere zum Häuten von Tomaten.

Das Abziehen der Haut von Lebensmitteln ist erwünscht, wenn die Haut nicht mitverzehrt werden soll. Außerdem kann die Haut bei der Weiterverarbeitung des Lebensmittels stören, wenn zwar das Fleisch oder Fruchtfleisch bei Suppen oder Desserts weich wird, die Haut des Lebensmittels aber zäh bleibt.

Wenn sich die Schale nicht einfach, z.B. durch Schälen entfernen lässt, ist es bei der Lebensmittelverarbeitung erforderlich, das Lebensmittel zu häuten, also die Haut als äußere Hülle bzw. Schicht des Lebensmittels abzuziehen, um sie vom Fleisch oder Fruchtfleisch zu entfernen.

Das Abziehen einer Haut von Lebensmitteln ist nicht leicht, wenn die Haut als dünne, relativ feste und glatte Schale ein eher weicheres Fleisch umschließt, wie es beispielsweise bei Tomaten, Paprikas oder Pfirsichen der Fall ist.

Zum Abziehen der Haut werden die Lebensmittel daher zunächst thermisch behandelt, beispielsweise in einer Mikrowelle, einem Dampfgarer, einem Grill, im Backofen oder in heißem Wasser. Bei solch einer thermischen Behandlung kann es allerdings zur unerwünschten Zersetzung von hitzelabilen Inhaltsstoffen kommen. Außerdem benötigt eine thermische Behandlung viel Energie und verursacht Kosten.

Als Alternative zur thermischen Behandlung ist bekannt, das Lebensmittel mit einer Lauge zu behandeln, was es ebenfalls erleichtert, dessen Haut anschließend abzuziehen. Der Einsatz einer Lauge ist auch kostenintensiv und zudem schlecht für die Umwelt.

Die Aufgabe der vorliegenden Erfindung ist somit ein Verfahren zum Abziehen der Haut eines Lebensmittels bereitzustellen, welches kostengünstig und umweltschonend ist, ohne die Inhaltsstoffe des Lebensmittels zu beeinträchtigen.

Die vorliegende Erfindung löst diese Aufgabe durch ein Verfahren zum Abziehen einer Haut von Lebensmitteln, insbesondere zum Häuten von Tomaten, das die folgenden Verfahrensschritte umfasst:
a) Behandeln des Lebensmittels mit einem elektrischen Feld und
b) Abziehen der Haut vom Lebensmittel.

Es hat sich überraschenderweise gezeigt, dass sich Lebensmittel einfach, schnell und kostengünstig häuten lassen, indem sie vor dem Abziehen ihrer Haut mit einem elektrischen Feld behandelt werden. Es bleibt weniger Fleisch bzw. Fruchtfleisch an der abgezogenen Haut hängen, was die Effektivität des Verfahrens erhöht. Das Behandeln des Lebensmittels mit einem elektrischen Feld ist ausreichend, um die Haut effektiv vom Lebensmittel abziehen zu können, ohne dass das Lebensmittel geschält werden muss, also wie z.B. bei Äpfeln ein Schnitt zwischen Fleisch bzw. Fruchtfleisch und Schale erfolgt. Dafür ist weder eine thermische Behandlung des Lebensmittels noch der Einsatz chemischer Reagenzien wie Laugen erforderlich. Die Behandlung mit einem elektrischen Feld genügt, um das Abziehen der Haut vom Lebensmittel signifikant zu verbessern. Die Inhaltsstoffe des Lebensmittels werden bei der elektrischen Behandlung nicht beeinträchtigt. Das Verfahren ist schnell durchgeführt, einfach und günstig im Vergleich zu den gängigen Behandlungsmethoden.

Unter "Abziehen" versteht man ein Verarbeitungsverfahren in der Lebensmittelherstellung, bei dem dünne Häute von Lebensmitteln entfernt werden. Dabei wird nur die äußere, das Fleisch bzw. Fruchtfleisch umhüllende Schicht abgenommen. Im Unterschied zum Schälen findet beim Abziehen kein Schnitt mit einem Messer statt, wie man es beispielsweise beim üblichen Schälen von Kartoffeln kennt.

Eine "Haut" im Sinne der vorliegenden Erfindung ist die äußerste Schicht bzw. äußere Hülle des Lebensmittels. Eine solche Haut ist insbesondere von einer ledrigen Schale, wie man sie beispielsweise von Zitrusfrüchten kennt, oder eine holzartigen Schale der Nussfrüchte zu unterscheiden, welche man manuell einfach vom Fruchtfleisch bzw. den Kernen trennen kann. Erfindungsgemäß ist die abzuziehende Haut mit einer darunterliegenden Schicht des Lebensmittels, beispielsweise dem Fleisch bzw. Fruchtfleisch verwachsen und lässt sich nicht ohne Weiteres davon trennen.

Die Erfindung kann mit den folgenden, jeweils für sich vorteilhaften und beliebig miteinander kombinierbaren Weiterentwicklungen und vorteilhaften Ausgestaltungen weiter verbessert werden.

Gemäß einer Ausführungsform umfasst das Lebensmittel ein Fleisch bzw. Fruchtfleisch, das von der Haut umschlossen ist. Die Haut kann eine essbare Haut sein. Eine Haut im Sinne der vorliegenden Erfindung ist insbesondere eine dünne Schicht, mit einer Dicke von maximal 0,1 mm, die durch eine Behandlung mit heißem Wasser oder Dampf oder durch Lauge gelöst und entfernt werden kann, im Gegensatz zu Kartoffeln oder Karotten, bei denen ein Lösen nur durch Dampfbehandlung mit schlagartigem entspannen möglich ist.

Das Fleisch bzw. Fruchtfleisch des Lebensmittels, welches beim Häuten von der Haut getrennt wird, ist vorzugsweise weich. Weich bedeutet, dass es einem äußeren Druck relativ leicht nachgibt und so beschaffen ist, dass zur Veränderung seiner Form kein oder nur ein relativ geringer Kraftaufwand nötig ist. Ein weiches Fleisch bzw. Fruchtfleisch kann insbesondere eine Härte haben, die kleiner als 4 N/mm² ist. Die Ermittlung der Härte erfolgt mittels Texturanalyse, wie etwa beschrieben in Albaloushj et al. (Journal of Applied Sciences Research, 8(6); 3053-3064, 2012).

Fruchtfleisch ist das saftige Gewebe in Früchten, Fruchtgemüse oder Gemüsen, welches einen hohen Wassergehalt aufweist, und in das in der Regel ein Samen oder mehrere Samen eingebettet sind. Zusammen mit Samen und seiner Haut bildet das Fruchtfleisch die Frucht.

Das Abziehen einer Haut von einem Fruchtfleisch ist sehr schwierig. Da das Fruchtfleisch meist weich ist, lässt es sich nur schwer mit einem Messer schälen. Daher kann man härtere Lebensmittel mit einer Schale, beispielsweise Kartoffeln oder Äpfel mit einer Klinge schälen, wohingegen dies bei weicheren Lebensmitteln mit einer Haut, wie z.B. Pfirsichen oder Tomaten schwierig bis unmöglich ist. Hier bietet das erfindungsgemäße Verfahren überraschenderweise den großen Vorteil, dass durch das Behandeln mit einem elektrischen Feld die Haut vom Fleisch bzw. Fruchtfleisch gelöst, zumindest aber deren Verbindung soweit herabgesetzt wird, dass sich die Haut anschließend leicht abziehen und gut vom Fleisch bzw. Fruchtfleisch trennen lässt.

Beim Behandeln des Lebensmittels mit einem elektrischen Feld kann ein Energieeintrag von wenigstens 0,2 kJ/kg in das Lebensmittel erfolgen. Ein Energieeintrag in dieser Größenordnung ist bereits ausreichend, um die Haut soweit vom Rest des Lebensmittels abzulösen, dass sie sich anschließend einfach abziehen lässt, ohne dass größere Stücke Fleisch bzw. Fruchtfleisch an der Haut hängen bleiben. Um ein besonders effektives Häuten zu ermöglichen und eine unnötige Überbehandlung zu vermeiden, kann durch das Behandeln mit einem elektrischen Feld ein Energieeintrag von 0,7 bis 6 kJ/kg in das Lebensmittel erfolgen.

Es hat sich ferner gezeigt, dass es vorteilhaft ist, wenn ein elektrisches Feld von 0,5 kV/cm bis 2 kV/cm angelegt wird. Derartige Feldstärken lassen sich mit handelsüblichen industriellen Kondensatoren erzielen, und vermeiden, dass unerwünschte Wechselwirkungen, beispielsweise thermische Effekte auftreten, die zu nicht beabsichtigten Veränderungen des Lebensmittels führen.

Die Haut lässt sich sehr gut von einem Lebensmittel abziehen, wenn das Lebensmittel vorher mittels elektrischer Pulse behandelt wurde. Dazu kann das Lebensmittel beispielsweise zwischen zwei Elektroden platziert werden, die mit einem Impulsgenerator verbunden sind. Das elektrische Feld, insbesondere die elektrischen Pulse, können sowohl durch Direktkontakt des Kondensators, der von den zwei Elektroden gebildet wird mit dem Lebensmittel, als auch überleitende Fluide erzeugt werden, wobei das Lebensmittel ganz oder teilweise in die leitenden Fluide eingelegt wird. Es können verschiedene Elektrodenformen, beispielsweise Platten-, Ring-, Gitter-, Hohl-, konische oder Durchflusselektroden eigesetzt werden. Als Impulsgenerator kann vorzugsweise ein Hochspannungsimpulsgenerator verwendet werden, der elektrische Felder in Form von kurzen Pulsen im Mikro- bis Millisekundenbereich einer hohen Spannung im Kilovoltbereich erzeugt. Der Impulsgenerator kann beispielsweise ein Marx-Generator sein. Es hat sich überraschenderweise herausgestellt, dass sich die Haut vom Lebensmittel dann besonders gut abziehen lässt, wenn das Lebensmittel mit wenigstens 10, vorzugsweise 10 bis 200 und besonders bevorzugt 30 bis 50 elektrischen Pulsen behandelt wird. Diese Pulszahl verbessert nicht nur das Abziehen der Haut vom Lebensmittel signifikant. Sie ermöglicht auch eine effektive Behandlung mit dem elektrischen Feld, die schnell, innerhalb von wenigen Sekunden vollzogen wird.

Das bei der Behandlung angelegte elektrische Feld kann insbesondere ein nicht-thermisch wirkendes elektrisches Feld sein, bei dem die Energieobergrenze so bemessen ist, dass im Wesentlichen keine Erwärmung des Lebensmittels im Sinne einer ohmschen Erhitzung stattfindet. Dies ist insbesondere dann der Fall, wenn sich das Lebensmittel nicht um mehr als 5°C im Behandlungsschritt a) erwärmt.

Der Schritt des Behandelns des Lebensmittels mit einem elektrischen Feld kann beispielsweise in einem Elektroporator erfolgen. Ein Elektroporator ist eine Vorrichtung, die ein elektrische Feld erzeugt, durch welches die Semipermeabilität der Zellmembran aufgehoben wird. Die Aufhebung der Semipermeabilität kann reversibel oder irreversibel erfolgen, je nach behandeltem Lebensmittel und Energieeintrag. Eine irreversible Elektroporation bewirkt eine dauerhafte Aufhebung der Semipermeabilität, was insofern mehr Flexibilität bietet, als dass das Abziehen der Haut vom Lebensmittel in Schritt b) auch noch mit einem gewissen zeitlichen Abstand vom Verfahrensschritt a) erfolgen kann. Aber auch eine reversible Elektroporation kann vorteilhaft sein, weil sie in der Regel schneller erzielt wird und weniger Energie benötigt.

Bei dem erfindungsgemäßen Verfahren kann die Haut von einem Lebensmittel abgezogen werden, das vorher nicht thermisch behandelt wurde. Man kann somit ausschließen, dass labile Inhaltsstoffe, z.B. Aromen, thermisch zersetzt werden.

Das erfindungsgemäße Verfahren kann auch vorsehen, dass in Schritt b) die Haut von einem Lebensmittel abgezogen wird, das nicht mit einer Säure oder Lauge behandelt wurde. Auch eine solche chemische Behandlung ist nicht erforderlich, sodass die vorliegende Erfindung diesbezüglich kostengünstiger und umweltverträglicher ist. Zudem vermeidet man unerwünschte Nebenwirkungen mit Inhaltsstoffen des Lebensmittels, die bei einer chemischen Behandlung auftreten können.

Mit dem erfindungsgemäßen Verfahren kann ein Lebensmittel gehäutet werden, das ein Obst, ein Fruchtgemüse, ein Gemüse oder ein Fisch ist. Obst stammt dabei in der Regel von mehrjährigen und Gemüse von einjährigen Pflanzen. Bei Obst ist der Zuckergehalt meist höher als bei Gemüse. Essbare Pflanzenteile, die gemäß unterschiedlichen Definitionen einerseits Gemüse und andererseits Obst zugeordnet sind, werden als Fruchtgemüse bezeichnet. Unter Fruchtgemüse fallen beispielsweise Paprika oder Tomaten.

Das Lebensmittel kann beispielsweise ausgewählt sein aus der Gruppe umfassend Tomaten, Paprika, Pflaumen, Pfirsiche und Beeren. Das Lebensmittel kann aber auch ein anderes Steinobst, beispielsweise eine Kirsche, Nektarine, Mirabelle oder eine sonstige Saftfrucht sein. Eine Saftfrucht zeichnet ein hoher Wassergehalt von mehr als 86 % aus.

Wenn es sich bei dem zu häutenden Lebensmittel um ein hohles Lebensmittel handelt, kann das Lebensmittel vor dem Verfahrensschritt a) geöffnet werden. Unter einem hohlen Lebensmittel ist somit ein Lebensmittel zu verstehen, das einen mit Luft gefüllten Hohlraum umfasst. Das ist beispielweise bei vielen Schotenfrüchten, Paprika oder Peperoni der Fall. Durch das Öffnen des hohlen Lebensmittels minimiert man den Anteil der Luft, den das elektrische Feld durchdringen muss. Luft als Dielektrikum beeinflusst die Behandlung mit dem elektrischen Feld negativ. Das erfindungsgemäße Verfahren kann somit beispielsweise ein Verfahren zum Häuten von einer Paprika sein, wobei die Paprika zuerst geöffnet, anschließend mit einem elektrischen Feld behandelt und abschließend die Haut der Paprika abgezogen wird.

Im Folgenden wird die Erfindung anhand vorteilhafter Ausgestaltungen mit Bezug auf die Zeichnungen und nachfolgenden Versuchsbeispielen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig und sinnvoll ist.

Es zeigen:
- Fig.1: ein Balkendiagramm mit Verlusten in % bei Abziehen der Haut von einem erfindungsgemäß behandelten Lebensmittel und von Kontrollproben;
- Fig. 2: ein Foto beim Messen der Abziehbarkeit der Haut von Tomaten;
- Fig. 3: Abbildungen von enthäuteten Tomaten, die erfindungsgemäß bzw. mit Kontrollverfahren behandelt wurden; und
- Fig. 4: ein Balkendiagramm zur Festigkeit eines gehäuteten Lebensmittels, das erfindungsgemäß bzw. gemäß einem Kontrollverfahren behandelt wurde.

Das erfindungsgemäße Verfahren wird anschließend in einer beispielhaften Ausführungsform anhand konkreter Versuchsergebnisse erläutert. Dabei wurden exemplarisch Tomaten gehäutet.

Es wurden nur vergleichbare Tomaten behandelt, deren Festigkeit vorherbestimmt wurde (Kontrollprobe: "Kontrolle"), damit die untersuchten Tomaten einen ähnlichen Reifestatus aufweisen.

Vor dem Abziehen der Haut wurden die Tomaten folgendermaßen behandelt:
- für 60 Sekunden in einer 10-prozentigen (w/v) Natronlauge bei 95°C (Kontrollprobe: "Lauge");
- für 60 Sekunden in kochendem Wasser (Kontrollprobe: "gekocht");
- ein Gesamtenergieeintrag von 1 kJ/kg mit Pulsen eines elektrischen Feldes von 1 kV/cm (Kontrollprobe: "PEF_1");
- ein Gesamtenergieeintrag von 2,5 kJ/kg mit Pulsen eines elektrischen Feldes von 1 kV/cm (Kontrollprobe: "PEF_2,5");
- ein Gesamtenergieeintrag von 5 kJ/kg einer Behandlung mit Pulsen eines elektrischen Feldes von 1 kV/cm (Kontrollprobe: "PEF_5");

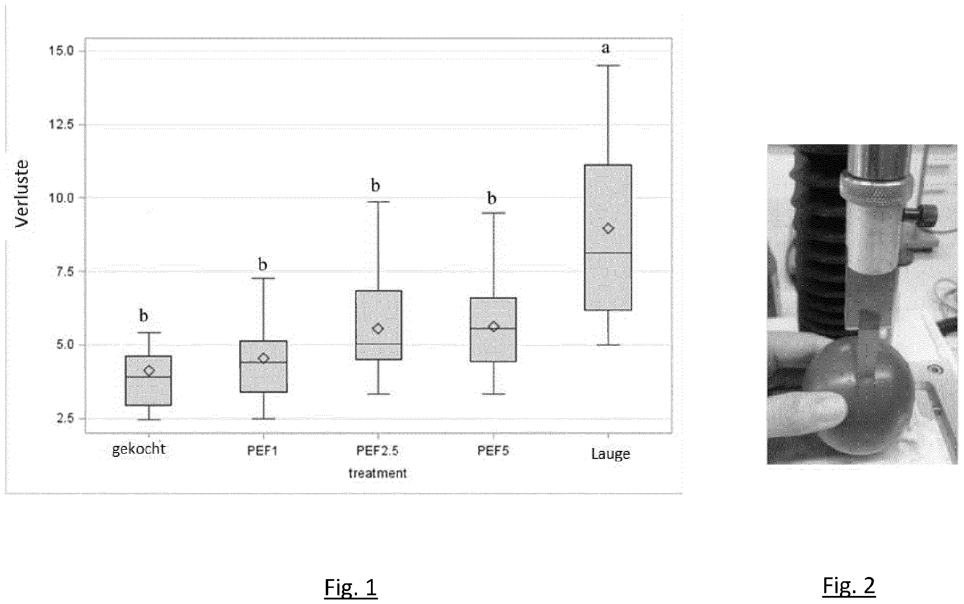

Nach der oben beschriebenen Behandlung wurden die Tomaten gehäutet. Beim Häuten wurde mittels eines Kraftmesssystems (Texture Analyser TA-XT, Stable Micro Systems) die zum Abziehen der Haut benötigte Kraft gemessen. Dazu wurde das freie Ende eines kurzen Streifens bereits abgezogener Tomatenhaut in die Vorrichtung eingespannt. Anschließend wurde die Haut weiter abgezogen und die dafür erforderliche Kraft gemessen (siehe Fig. 2).

Der ermittelte Verlust beim Schälen von Tomaten in % in Fig. 1 dargestellt. Als Verlust wurde die an der Schale anhaftende Menge Fruchtfleisch bezogen auf das Gesamtgeweicht der Frucht ermittelt. Bei Einsatz einer PEF Behandlung kann ein Häuten mit ähnlich geringem Verlust wie nach einem Kochen erreicht werden. Im Vergleich zum Kochen wird jedoch weniger Energie benötigt. Im Vergleich zu einer Laugebehandlung ergeben sich mit PEF geringere Ausbeuteverluste.

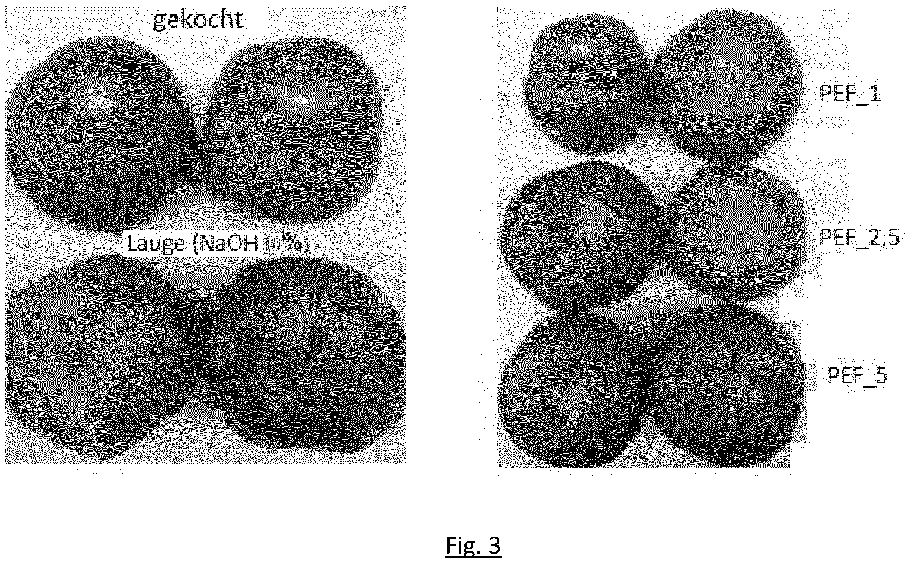

Abbildungen der gehäuteten Tomaten, sind in Fig. 3 dargestellt. In Fig. 3 ist gut zu erkennen, dass sich die Tomaten mit dem erfindungsgemäßen Verfahren sehr gut häuten lassen und eine sehr glatte Oberfläche haben. Im Unterschied dazu weisen die gehäuteten Tomaten der Laugen-Kontrollprobe eine rasche unregelmäßige Oberfläche am Fruchtfleisch auf, was auf hohe Fruchtfleischverluste hindeutet.

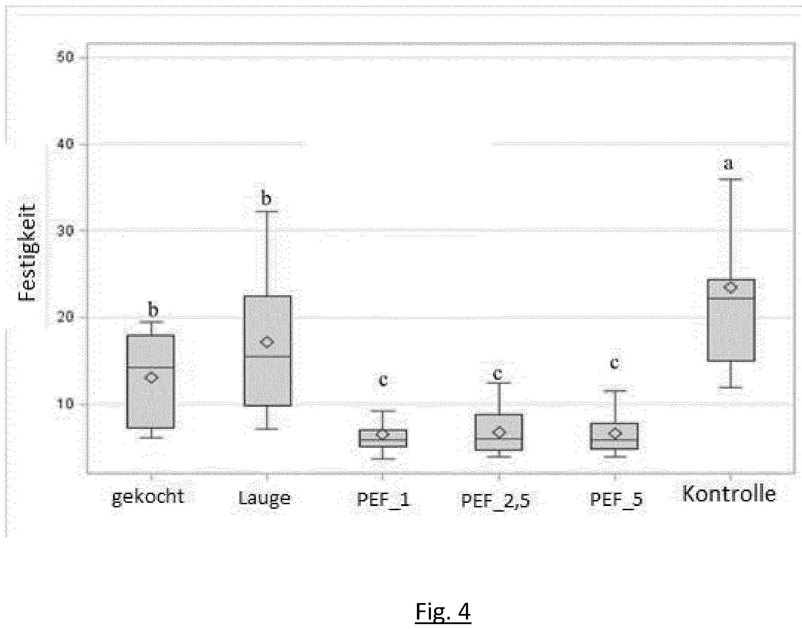

Bei dem erfindungsgemäßen Verfahren wird die Festigkeit der Tomaten herabgesetzt. Das könnte ein Faktor für das einfachere Abziehen der Haut sein. In Fig. 4 ist zu erkennen, dass die mit elektrischen Feldern behandelten Proben die geringste Festigkeit aufweisen, welche deutlich unter der Festigkeit der Kontrolle bzw. der mit Lauge bzw. gekochten Kontrollprobe liegt. Die Verringerung der Festigkeit kann zu einer verbesserten Handhabbarkeit der Produkte und einfacheren Förderung beim Pumpen oder Abfüllen der Ware beitragen. Falls ein Erweichen unerwünscht ist könnte durch den Einsatz geeigneter Methoden oder Verfahren zur Texturbeeinflussung eine Erhöhung der Festigkeit erreicht werden. Dies könnte beispielsweise durch Zugabe von einem Vernetzer, beispielsweise Calciumionen zur Vernetzung von Pektin, den Einsatz einer geeigneten Temperatur-Zeit-Behandlung zur Entesterung und anschließenden Vernetzung von Pektin oder die Zugabe von Enzymen erfolgen.

## Patentansprüche

1. Verfahren zum Abziehen einer Haut eines Lebensmittels, die mit einer darunterliegenden Schicht des Lebensmittels verwachsen ist, insbesondere zum Häuten von Tomaten, umfassend die folgenden Behandlungsschritte:
a) Behandeln des Lebensmittels mit einem elektrischen Feld; und
b) Abziehen der Haut vom Lebensmittel.

2. Verfahren nach Anspruch 1, wobei das Lebensmittel ein Fruchtfleisch umfasst, dass von der Haut umschlossen ist.

3. Verfahren nach Anspruch 1 oder 2, wobei durch das Behandeln mit dem elektrischen Feld ein Energieeintrag von wenigstens 0,2 kJ/kg, vorzugsweise von 0,7 bis 6 kJ/kg in das Lebensmittel erfolgt.

4. Verfahren nach einem der Ansprüche 1 bis 3, wobei ein elektrisches Feld von 0,5 kV/cm bis 2 kV/cm angelegt wird.

5. Verfahren nach einem der Ansprüche 1 bis 4, wobei das Lebensmittel mit einem gepulsten elektrischen Feld behandelt wird.

6. Verfahren nach Anspruch 5, wobei das Lebensmittel mit wenigstens 10 elektrischen Pulsen, vorzugsweisen 10 bis 200 elektrischen Pulsen, besonders bevorzugt 30 bis 50 elektrischen Pulsen behandelt wird.

7. Verfahrens nach einem der Ansprüche 1 bis 6, wobei das Lebensmittel nicht thermisch behandelt wurde.

8. Verfahrens nach einem der Ansprüche 1 bis 7, wobei das Lebensmittel nicht mit einer Säure oder einer Lauge behandelt wurde.

9. Verfahren nach einem der Ansprüche 1 bis 8, wobei das Lebensmittel ein Obst, ein Fruchtgemüse, ein Gemüse oder ein Fisch ist.

10. Verfahren nach Anspruch 9, wobei das Lebensmittel ausgewählt ist aus eine Gruppe umfassend: Tomaten, Paprika, Pflaumen, Pfirsiche und Beeren.

11. Verfahren nach einem der Ansprüche 1 bis 10, wobei ein hohles Lebensmittel vor dem Schritt des Behandelns geöffnet wird.
